# EUROPEAN PATENT SPECIFICATION

(11) **EP 3 417 089 B1**
(45) Date of publication and mention of the grant of the patent: **13.12.2023**
(21) Application number: 17753817.0
(22) Date of filing: 16.02.2017
(51) Int. Cl.: C25D 1/16, C25D 7/00, C25D 5/12, B32B 15/01, C25D 5/00, C25D 5/18

(54) **ARTICLES INCLUDING A MULTI-LAYER COATING AND METHODS**
ARTIKEL MIT EINER MEHRSCHICHTIGEN BESCHICHTUNG UND VERFAHREN
ARTICLES COMPRENANT UN REVÊTEMENT MULTICOUCHE ET PROCÉDÉS ASSOCIÉS

(30) Priority: 16.02.2016 US 201662296038 P; 02.08.2016 US 201662370212 P
(43) Date of publication of application: 26.12.2018
(73) Proprietor: Xtalic Corporation, Marlborough, Massachusetts 01752 (US)
(72) Inventor: CAHALEN, John, Arlington, Massachusetts 02476 (US); BUI, Kathy, Bedford, Massachusetts 01730 (US); GRIFFITHS, Peteris, Waltham, Massachusetts 02452 (US); LUND, Alan C., Framingham, Massachusetts 01701 (US); CROSS, Samuel R., Cambridge, Massachusetts 02139 (US); TESTONI, Anne L., Bolton, Massachusetts 01740 (US)
(74) Representative: Hoffmann Eitle
(86) International application number: PCT/US2017/018127
(87) International publication number: WO 2017/143033

(56) References cited:
- EP-A2- 0 410 472
- GB-A- 2 186 597
- JP-A- 2001 234 392
- US-A- 4 707 225
- US-A- 5 412 250
- US-A1- 2003 189 261
- US-A1- 2006 024 502
- US-A1- 2011 139 491
- US-A1- 2012 118 755
- US-B1- 6 200 629
- US-B2- 8 658 289

## Description

### Field of Invention

The present invention generally relates to articles including a multi-layer coating and related methods (e.g., electrodeposition methods).

### Background of Invention

Many types of coatings may be applied on a base material. Electrodeposition is a common technique for depositing such coatings. Electrodeposition generally involves applying a voltage to a base material placed in an electrodeposition bath to reduce metal ionic species within the bath which deposit on the base material in the form of a metallic coating. The voltage may be applied between an anode and a cathode using a power supply. At least one of the anode or cathode may serve as the base material to be coated. In some electrodeposition processes, the voltage may be applied as a complex waveform such as in pulse plating, alternating current plating, or reverse-pulse plating. A variety of metallic coatings may be deposited using electrodeposition.

### Summary of Invention

Articles including multi-layer coatings and methods are described herein.

In one aspect, an article is provided. According to the invention, the article comprises a substrate and a coating formed on the substrate. The coating comprises a first metallic layer formed on the substrate; a second metallic layer formed on the first metallic layer; a third metallic layer formed on the second metallic layer; and a fourth metallic layer formed on the third metallic layer.

In one aspect, an article is provided. The article comprises a substrate and a coating formed on the substrate. The coating comprising multiple metallic layers, wherein the article has a time to initial visible failure in an immersion corrosion test of at least 20 minutes at 5 Volts in artificial perspiration.

In one aspect, a method is provided. The method comprises electrodepositing multiple layers of a coating on a substrate. The coating comprises a first metallic layer formed on the substrate; a second metallic layer formed on the first metallic layer; a third metallic layer formed on the second metallic layer; and a fourth metallic layer formed on the third metallic layer.

In one aspect, an article is provided. The article comprises a substrate and a coating formed on the substrate. The coating comprises a platinum group metallic layer, and a metallic layer formed on the platinum group metallic layer and comprising at least one metal selected from the group consisting of nickel, tin and silver. The coating further comprises a second platinum group metallic layer formed on the metallic layer comprising at least one metal selected from the group consisting of nickel, tin and silver.

Other aspects, embodiments, and features of the invention will become apparent from the following detailed description.

### Brief Description of Drawings

FIGS. 1-3 schematically illustrate cross-sections of coated articles according to some embodiments described herein.
FIG. 4 is a graph illustrating the time to initial visible failure (minutes) in an immersion corrosion test for Samples 1 and 2 as described in Example 1.
FIG. 5 includes copies of photographs of Samples 1 and 2 after immersion corrosion testing as described in Example 1.

### Detailed Description

Articles including a multi-layer coating and methods for applying coatings are described herein. The article may include a substrate on which the multi-layer coating is formed. The coating includes multiple metallic layers. For example, the coating may include at least four metallic layers (e.g., each having a different composition). In general, a metallic layer comprises one (e.g., only one) or more metal(s). In some cases, at least some (e.g., all) of the metallic layers of the coating may be applied using an electrodeposition process. As described further below, articles including the multi-layer coating can exhibit desirable properties and characteristics including, for example, exceptional immersion corrosion properties. The articles may be used in a variety of applications including in electrical and/or electronic applications such as electrical connectors.

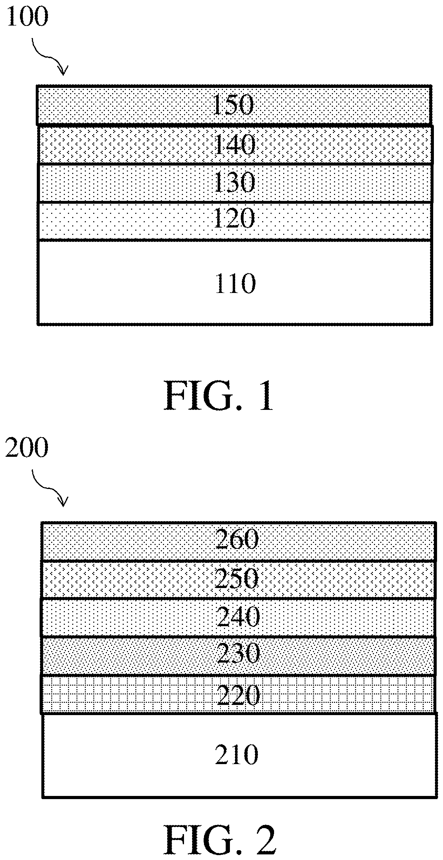

Certain inventive articles relate to multi-layer coatings on substrates. FIG. 1 shows one such exemplary article, in which multi-layer coating 100 is deposited on substrate 110. The multi-layer coating comprises a first metallic layer 120, a second metallic layer 130, a third metallic layer 140, and a fourth metallic layer 150. It also be understood that additional intervening layers may optionally be present between the substrate and the multilayer and/or between any two metallic layers. For example, there may be intervening layers between the substrate and the first metallic layer and/or between the first metallic layer and the second metallic layer.

Furthermore, as used herein, when a layer is referred to as being "on" another layer or the substrate, it can be directly on the layer or the substrate, or an intervening layer may be present between the layer(s) or layer and substrate. A layer that is "directly on" another layer or substrate means that no intervening layer is present.

As noted above, the articles described herein may include a substrate. A variety of different substrates may be suitable. In some cases, the substrate may comprise an electrically conductive material, such as a metal, metal alloy, intermetallic material, or the like. Suitable base materials include steel, stainless steel, copper and copper alloys (e.g. brass or bronze materials), aluminum and aluminum alloys, nickel and nickel alloys, polymers with conductive surfaces and/or surface treatments, and transparent conductive oxides, amongst others. In some embodiments, copper base materials are preferred. In some embodiments, the substrate may be formed substantially of one material (e.g., a single material layer or a bulk material). In other embodiments, the substrate is formed of more than one layer of different materials.

The substrate may be in the form of a variety of shapes and dimensions. For example, the substrate may be strip. In some cases, the substrate may be perforated. In some cases, the substrate may be a discrete component.

The multi-layer coating can be formed on the substrate. In some cases, the coating covers substantially the entire outer surface area of the substrate. In some cases, the coating only covers a portion of the outer surface area of the substrate. For example, the coating may only cover one outer surface of the substrate. In some cases, portions of the substrate may be masked when forming the coating so that the coating is formed selectively on certain portions of the substrate while leaving other portions of the substrate uncoated. In some embodiments, one or more layers of the coating may be selectively deposited (e.g., using a mask) when being formed. That is, one or more layers (e.g., a metal layer such as Au or Rh) may cover only a portion of the outer surface area of the underlying layer or substrate.

The first layer of coating 100 is metallic layer120. In some embodiments, the first metallic layer is formed directly on the substrate. In other embodiments, an intervening layer may be formed between the substrate and the first metallic layer.

According to the invention first metallic layer 120 comprises a nickel-based alloy. According to the invention, the nickel-alloy further comprises tungsten and/or molybdenum (e.g., a nickel-tungsten alloy, a nickel-molybdenum alloy, a nickel-tungsten-molybdenum alloy). The nickel alloy may be in the form of a solid solution. Other nickel alloys may also be employed. For example, the nickel alloy may further comprise cobalt, phosphorus, and/or palladium. In some cases, the weight percent of nickel in the alloy may be between 25-85 weight percent; and, in some cases, between 50 and 80 weight percent. In these cases, the remainder of the alloy may be tungsten and/or molybdenum. Other weight percentages outside of this range may be used as well. For example, in some embodiments and for certain applications, the weight percent of tungsten in the alloy may be greater than or equal to 10 weight percent; in some cases, greater than or equal to 14 weight percent; in some cases, greater than or equal to 15 weight percent; and, in some cases greater than or equal to 20 weight percent. In some cases, the total weight percentage of tungsten in the alloy is less than or equal to 50 weight percent; in some cases, the total weight percentage of tungsten in the alloy is less than or equal to 45 weight percent; in some cases, the total weight percentage of tungsten in the alloy is less than or equal to 40 weight percent; in some cases, the total weight percentage of tungsten in the alloy is less than or equal to 35 weight percent; in some cases, the total weight percentage of tungsten in the alloy is less than or equal to 30 weight percent; and, in some cases, the total weight percentage of tungsten in the alloy is less than or equal to 20 weight percent.

In some cases, first metallic layer 120 may have a particular microstructure. For example, the first metallic layer may have a nanocrystalline microstructure. As used herein, a "nanocrystalline" structure refers to a structure in which the number-average size of crystalline grains is less than one micron. The number-average size of the crystalline grains provides equal statistical weight to each grain and is calculated as the sum of all spherical equivalent grain diameters divided by the total number of grains in a representative volume of the body. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the first metallic layer may have an amorphous structure. As known in the art, an amorphous structure is a non-crystalline structure characterized by having no long range symmetry in the atomic positions. Examples of amorphous structures include glass, or glass-like structures.

In some embodiments, first metallic layer 120 may have a thickness of greater than 0.1 microns, greater than 0.25 microns, greater than 0.5 microns, greater than 1.0 microns and/or greater than 2.0 microns. In some embodiments, the thickness is less than 20.0 microns, less than 10.0 microns, less than 5.0 microns, less than 3.0 microns, less than 2.0 microns, less than 1.0 micron and/or less than 0.5 micron. It should be understood that all suitable combinations of the above-noted ranges are possible (e.g., between 0.1 and 5.0 microns; between 0.25 and 3.0 microns; between 0.5 and 2.0 microns, and the like).

The second layer of coating 100 is a metallic layer. In some embodiments, second metallic layer 130 is formed directly on first metallic layer 120. In other embodiments, an intervening layer is formed between the first metallic layer and the second metallic layer. For example, an intervening strike layer (e.g., comprising Pd) may be formed between the first metallic layer and the second metallic layer to enhance adhesion.

In some cases, second metallic layer 130 comprises silver. The silver may be in the form of silver metal (e.g., substantially pure metal). In some cases, the second metallic layer comprises a silver-based alloy. Such alloys may also, for example, comprise tungsten and/or molybdenum. The silver-based alloy may be in the form of a solid solution. In some embodiments, it is preferable for the second metallic layer to comprise a silver-tungsten alloy. Other silver alloys may also be employed. In some embodiments, the weight percent of tungsten and/or molybdenum in the alloy (e.g., the remainder being substantially silver) may be at least 0.1 weight percent, at least 0.25 weight percent, at least 0.5 weight percent, at least 1 weight percent, at least 2 weight percent, at least 5 weight percent and/or at least 10 weight percent. In some embodiments, the weight percent of tungsten and/or molybdenum in the alloy (e.g., the remainder being substantially silver) may be less than 25 weight percent, less than 10 weight percent, less than 5 weight percent, less than 2.5 weight percent, less than 1 weight percent and/or less than 0.5 weight percent. It should be understood that all suitable combinations of the above-noted ranges are possible (e.g., between 0.1 and 25 weight percent; between 0.5 and 5 weight percent; between 1 and 2.5 and the like). Other weight percentages outside of this range may be used as well. In some embodiments, the second metallic layer may comprise a "hard silver". In some cases, the Vickers hardness of the silver-based second metallic layer is greater than 100 VHN; and, in some cases, greater than 150 VHN; and, in some cases greater than 200 VHN. In some cases, the Vickers hardness is less than 500 VHN and, in some cases, less than 400 VHN.

In some cases, second metallic layer 130 may have a particular microstructure. For example, the second metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the second metallic layer may have an amorphous structure.

In some cases, second metallic layer 130 (e.g., silver-based metallic layer) is thermally stable. For example, the grain size of the layer remains stable at elevated temperatures. In some cases, the grain size of the second metallic layer changes by no more than about 30 nm, no more than about 20 nm, no more than about 15 nm, no more than about 10 nm, or no more than about 5 nm following exposure to a temperature of at least 150 °C for at least 500 hours. In some cases, the grain size changes by no more than about 50 nm, no more than about 30 nm, no more than about 20 nm, no more than about 15 nm, no more than about 10 nm, or no more than about 5 nm following exposure to a temperature of about 225°C for at least 500 hours. In addition, the contact resistance of the coating may change by less than about 25%, less than about 20%, less than about 15%, less than about 10%, or less than about 5%, following exposure to a temperature of about 150 °C or 225°C for at least about 500 hours.

In some cases, the hardness of second metallic layer 130 changes by no more than about 5%, no more than about 10%, no more than about 20%, no more than about 30% or no more than about 40% following exposure to a temperature of at least 150 °C for at least 500 hours. In some cases, the hardness of the second metallic layer changes by no more than about 5%, no more than about 10%, no more than about 20%, no more than about 30%, or no more than about 40% following exposure to a temperature of at least 225°C for at least 500 hours.

In some embodiments, second metallic layer 130 may have a thickness of greater than 0.01 microns, greater than 0.1 microns, greater than 0.25 microns, greater than 0.5 microns, and/or greater than 1.0 microns. In some embodiments, the thickness is less than 25.0 microns, less than 10.0 microns, less than 5.0 microns, less than 2.5 microns, less than 1.0 microns and/or less than 0.5 microns. It should be understood that all suitable combinations of the above-noted ranges are possible (e.g., between 0.1 and 10.0 microns; between 0.25 and 5.0 microns; between 0.5 and 3.0 microns and the like).

The third layer of coating 100 is a metallic layer. In some embodiments, third metallic layer 140 is formed directly on second metallic layer 130. In other embodiments, an intervening layer is formed between the second metallic layer and the third metallic layer.

According to the invention, third metallic layer 140 comprises one or more precious metals. Examples of suitable precious metals include Ru, Rh, Os, Ir, Pd, Pt, Ag, and/or Au. In some embodiments, the precious metal is selected from the group consisting Ru, Os, Ir, Pd, Pt, Ag, and Au, or combinations thereof. Gold may be preferred in some embodiments. Palladium may be preferred in some embodiments. In some embodiments, the metal layer consists essentially of one precious metal. In some embodiments, it may be preferable that the metal layer is free of tin. In some cases, the precious metal is not rhodium and/or is not ruthenium. In other cases, the metal layer may comprise an alloy that includes at least one precious metal and at least one other metal. The other metal may be selected from Ni, W, Fe, B, S, Co, Mo, Cu, Cr, Zn, and Sn, amongst others.

In some cases, third metallic layer 140 may have a particular microstructure. For example, the third metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the third metallic layer may have an amorphous structure.

In some embodiments, third metallic layer 140 may have a thickness of greater than 0.01 microns, greater than 0.05 microns, greater than 0.1 microns, greater than 0.25 microns, greater than 0.5 microns, greater than 1.0 microns and/or greater than 5.0 microns. In some embodiments, the thickness is less than 10.0 microns, less than 5.0 microns, less than 2.0 microns, less than 1.0 microns, less than 0.5 microns, less than 0.25 microns and/or less than 0.1 microns. It should be understood that all suitable combinations of the above-noted ranges are possible (e.g., between 0.05 and 5.0 microns; between 0.1 microns and 3.0 microns; between 0.1 and 2.0 microns; between 0.25 microns and 0.75 microns, and the like).

According to the invention, coating 100 includes fourth layer. The fourth layer of the coating is metallic layer 150. In some embodiments, the fourth metallic layer is formed directly on third metallic layer 140. In other embodiments, an intervening layer is formed between the third metallic layer and the fourth metallic layer.

According to the invention, fourth metallic layer 150 comprises a platinum group metal (e.g., ruthenium, rhodium, palladium, osmium, iridium, and/or platinum). In some cases, it may be preferable for the platinum group metal to be rhodium. It has been observed that particularly attractive properties (e.g., immersion corrosion) are achievable when the fourth metallic layer comprises rhodium. Rhodium may be in the form of rhodium metal (e.g., substantially pure). In some cases, rhodium may be in the form of an alloy along with one or more other metals (e.g., precious metals). Other compositions may also be suitable for the fourth metallic layer.

In some cases, fourth metallic layer 150 (e.g., layer comprising rhodium) may have a particular microstructure. For example, the fourth metallic layer (e.g., layer comprising rhodium) may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the fourth metallic layer may have an amorphous structure.

In some embodiments, fourth metallic layer 150 (e.g., layer comprising rhodium) may have a thickness of greater than 0.01 microns, greater than 0.05 microns, greater than 0.1 microns, greater than 0.25 microns, greater than 0.5 microns, greater than 1.0 microns and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. It should be understood that all suitable combinations of the above-noted ranges are possible (e.g., between 0.01 and 10.0 microns; between 0.05 and 5.0 microns; between 0.05 and 2.0 microns; or between 0.1 microns and 0.5 microns, and the like).

In some embodiments, coating 100 includes first metallic layer 120 comprising nickel (e.g., a nickel tungsten alloy), second metallic layer 130 comprising silver (e.g., a silver tungsten alloy, third metallic layer 140 comprising palladium or gold and fourth metallic layer 150 comprising rhodium. As described further below in the Example 1, this arrangement of layers unexpectedly exhibits particularly exceptional properties including exceptional immersion corrosion properties (e.g., with or without an applied bias). Other particularly exceptional properties can include desirable coloration (e.g., desired shade/tone, color stability over time, etc.), excellent wear resistance, and a stable surface conductivity (e.g., a contact resistance that differs by less than 250 mOhm, less than 100 mOhm, less than 50 mOhm, less than 20 mOhm, less than 10 mOhm, less than 5 mOhm and/or less than 1 mOhm over testing as measured by EIA 364 Test Protocol).

It should be understood that coating 100 may include more than four layers and more than four metallic layers. However, in some embodiments, the coating may only include four layers.

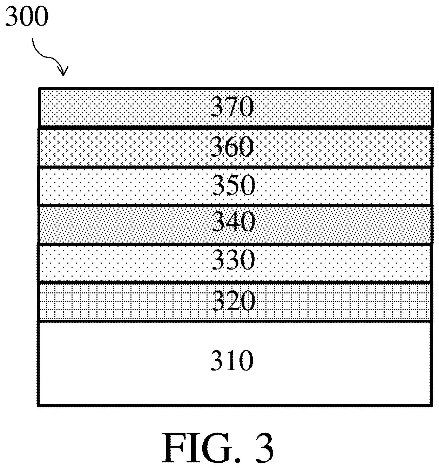

In the following multi-layer coatings 200 and 300 are described for reference only, multi-layer coatings 200 and 300 not being according to the invention. Additional configurations not being according to the invention, can also be understood by reference to FIGS. 2 and 3. These configurations can be fabricated on substrates as described above. In some embodiments, each metallic layer within the multi-layer may have a different chemical composition. For example, FIG. 2 shows one non-limiting embodiment of a multi-layer coating on a substrate. Multi-layer coating 200 on substrate 210 may comprise a first metallic layer 220, a second metallic layer 230, a third metallic layer 240, a fourth metallic layer 250, and a fifth metallic layer 260. It should be understood that intervening layers may be present between any two metallic layers, and/or between the first metallic layer and the substrate.

As noted above, the articles described herein may include substrate 210. A variety of different substrates may be suitable. In some cases, the substrate may comprise an electrically conductive material, such as a metal, metal alloy, intermetallic material, or the like. Suitable base materials include steel, stainless steel, copper and copper alloys (e.g. brass or bronze materials), aluminum and aluminum alloys, nickel and nickel alloys, polymers with conductive surfaces and/or surface treatments, and transparent conductive oxides, amongst others. In some embodiments, copper base materials are preferred. In some embodiments, the substrate may be formed substantially of one material (e.g., a single material layer or a bulk material). In other embodiments, the substrate is formed of more than one layer of different materials.

The substrate may be in the form of a variety of shapes and dimensions. For example, the substrate may be strip. In some cases, the substrate may be perforated. In some cases, the substrate may be a discrete component.

Multi-layer coating 200 can be formed on the substrate. In some cases, the coating covers substantially the entire outer surface area of the substrate. In some cases, the coating only covers a portion of the outer surface area of the substrate. For example, the coating may only cover one outer surface of the substrate. In some cases, portions of the substrate may be masked when forming the coating so that the coating is formed selectively on certain portions of the substrate while leaving other portions of the substrate uncoated. In some embodiments, one or more layers of the coating may be selectively deposited (e.g., using a mask) when being formed. That is, one or more layers (e.g., a metal layer such as Pd or Rh) may cover only a portion of the outer surface area of the underlying layer or substrate.

As described above, multi-layer coating 200 may optionally comprise first metallic layer 220. In some embodiments, the first metallic layer is formed directly on substrate 210. In other embodiments, an intervening layer may be formed between the substrate and the first metallic layer.

In certain embodiments, first metallic layer 220 may comprise copper. The copper may be in the form of copper metal (e.g., substantially pure metal). In some embodiments, the first metallic layer may comprise nickel (e.g., bright nickel). The nickel may be in the form of nickel metal (e.g., substantially pure metal) or in the form of a nickel-based alloy. In certain embodiments, the first metallic layer may comprise tin (e.g., bright tin). The tin may be in the form of tin metal (e.g., substantially pure metal) or in the form of a tin-based alloy.

In some cases, first metallic layer 220 may have a particular microstructure. For example, the second metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the second metallic layer may have an amorphous structure.

In some embodiments, first metallic layer 220 may have a thickness of greater than 0.25 microns, 0.5 microns, 1.0 micron, 2.5 microns. In some embodiments, the first metallic layer may have a thickness of less than 10 microns, 5 microns, 2 microns, 1 micron, 0.5 microns, 0.25 microns,. Combinations of the above-referenced ranges are also possible (e.g., between 0.25 and 10.0 microns; between 0.5 and 5.0 microns; between 0.25 and 2.0 microns; or between 1.0 microns and 5 microns, and the like). Other ranges are also possible. In certain embodiments, the first metallic layer may have a thickness of about 2 microns.

As described above, multi-layer coating 200 may optionally comprise second metallic layer 230. In some embodiments, the second metallic layer is formed directly on first metallic layer 220. In other embodiments, an intervening layer may be formed between the first metallic layer and the second metallic layer. In yet other embodiments, the second metallic layer may be formed directly on substrate 210.

In some embodiments, second metallic layer 230 comprises a platinum group metal (e.g., it may be a platinum group-based layer). Non-limiting examples of suitable platinum group metals include ruthenium, rhodium, palladium, osmium, iridium, and/or platinum. Palladium may be preferred in some embodiments (e.g., the second metallic layer may be a palladium-based layer). In some embodiments, the second metallic layer consists essentially of one precious metal. In some embodiments, it may be preferable that the second metallic layer is free of tin. In some cases, the platinum group metal is not rhodium and/or is not ruthenium. In other cases, the second metallic layer may comprise an alloy that includes at least one platinum group metal and at least one other metal. The other metal may be selected from Ni, W, Fe, B, S, Co, Mo, Cu, Cr, Zn, and Sn, amongst others.

In some cases, second metallic 230 layer may have a particular microstructure. For example, the second metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the second layer may have an amorphous structure.

In some embodiments, second metallic layer 230 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In certain embodiments, the second metallic layer may have a thickness of about 0.5 microns.

As described above, multi-layer coating 200 may optionally comprise third metallic layer 240. In some embodiments, the third metallic layer is formed directly on second metallic layer 230. In other embodiments, an intervening layer may be formed between the second metallic layer and the third metallic layer.

In some embodiments, for example, third metallic layer 240 may comprise nickel (e.g., be a nickel-based layer). The nickel may be in the form of nickel metal (e.g., substantially pure metal). In some cases, the third metallic layer may comprise a nickel-based alloy. In some cases, the nickel-alloy further comprises tungsten and/or molybdenum (e.g., a nickel-tungsten alloy, a nickel-molybdenum alloy, a nickel-tungsten-molybdenum alloy). The nickel alloy may be in the form of a solid solution. Other nickel alloys may also be employed. For example, the nickel alloy may further comprise cobalt, phosphorus, and/or palladium. In some cases, the weight percent of nickel in the alloy may be between 25-85 weight percent; and, in some cases, between 50 and 80 weight percent. In these cases, the remainder of the alloy may be tungsten and/or molybdenum. Other weight percentages outside of this range may be used as well. For example, in some embodiments and for certain applications, the weight percent of tungsten in the alloy may be greater than or equal to 10 weight percent; in some cases, greater than or equal to 14 weight percent; in some cases, greater than or equal to 15 weight percent; and, in some cases greater than or equal to 20 weight percent. In some cases, the total weight percentage of tungsten in the alloy is less than or equal to 50 weight percent; in some cases, the total weight percentage of tungsten in the alloy is less than or equal to 45 weight percent; in some cases, the total weight percentage of tungsten in the alloy is less than or equal to 40 weight percent; in some cases, the total weight percentage of tungsten in the alloy is less than or equal to 35 weight percent; in some cases, the total weight percentage of tungsten in the alloy is less than or equal to 30 weight percent; and, in some cases, the total weight percentage of tungsten in the alloy is less than or equal to 20 weight percent.

In certain embodiments, third metallic layer 240 may be a tin-based layer, or may comprise tin. The tin may be in the form of tin metal (e.g., substantially pure metal). In some cases, the third metallic layer may comprise a tin-based alloy. The tin alloy may be in the form of a solid solution.

In some embodiments, third metallic layer 240 is a silver-based layer, or a layer which comprises silver. The silver may be in the form of silver metal (e.g., substantially pure metal). In some cases, the third metallic layer may comprise a silver-based alloy. Such alloys may also, for example, comprise tungsten and/or molybdenum. The silver-based alloy may be in the form of a solid solution. In some embodiments, it is preferable for the third metallic layer to comprise a silver-tungsten alloy. Other silver alloys may also be employed. In some embodiments, the weight percent of tungsten and/or molybdenum in the alloy (e.g., the remainder being substantially silver) may be at least 0.1 weight percent, at least 0.25 weight percent, at least 0.5 weight percent, at least 1 weight percent, at least 2 weight percent, at least 5 weight percent and/or at least 10 weight percent. In some embodiments, the weight percent of tungsten and/or molybdenum in the alloy (e.g., the remainder being substantially silver) may be less than 25 weight percent, less than 10 weight percent, less than 5 weight percent, less than 2.5 weight percent, less than 1 weight percent and/or less than 0.5 weight percent. It should be understood that all suitable combinations of the above-noted ranges are possible (e.g., between 0.1 and 25 weight percent; between 0.5 and 5 weight percent; between 1 and 2.5 and the like). Other weight percentages outside of this range may be used as well. In some embodiments, the third metallic layer may comprise a "hard silver". In some cases, the Vickers hardness of the silver-based second metallic layer is greater than 100 VHN; and, in some cases, greater than 150 VHN; and, in some cases greater than 200 VHN. In some cases, the Vickers hardness is less than 500 VHN and, in some cases, less than 400 VHN. In some cases, third metallic layer 240 is a silver-based layer and is thermally stable. For example, the grain size of the silver-based third metallic layer remains stable at elevated temperatures. In some cases, the grain size of the silver-based third metallic layer changes by no more than about 30 nm, no more than about 20 nm, no more than about 15 nm, no more than about 10 nm, or no more than about 5 nm following exposure to a temperature of at least 150 °C for at least 500 hours. In some cases, the grain size changes by no more than about 50 nm, no more than about 30 nm, no more than about 20 nm, no more than about 15 nm, no more than about 10 nm, or no more than about 5 nm following exposure to a temperature of about 225 °C for at least 500 hours. In addition, the contact resistance of the coating may change by less than about 25%, less than about 20%, less than about 15%, less than about 10%, or less than about 5%, following exposure to a temperature of about 150 °C or 225 °C for at least about 500 hours.

In some cases, third metallic layer 240 is a silver-based layer and has a stable hardness. In certain embodiments, the hardness of the silver-based third metallic layer changes by no more than about 5%, no more than about 10%, no more than about 20%, no more than about 30% or no more than about 40% following exposure to a temperature of at least 150 °C for at least 500 hours. In some cases, the hardness of the silver-based third metallic layer changes by no more than about 5%, no more than about 10%, no more than about 20%, no more than about 30%, or no more than about 40% following exposure to a temperature of at least 225 °C for at least 500 hours.

In some cases, third metallic layer 240 layer may have a particular microstructure. For example, the third metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the third metallic layer may have an amorphous structure.

In some embodiments, third metallic layer 240 may have a thickness of greater than 0.25 microns, 0.5 microns, 1.0 micron, 2.5 microns. In some embodiments, the first metallic layer may have a thickness of less than 10 microns, 5 microns, 2 microns, 1 micron, 0.5 microns, 0.25 microns,. Combinations of the above-referenced ranges are also possible (e.g., between 0.25 and 10.0 microns; between 0.5 and 5.0 microns; between 0.25 and 2.0 microns; or between 1.0 microns and 5 microns, and the like). Other ranges are also possible. In certain embodiments, the third metallic layer may have a thickness of about 2 microns.

As described above, multi-layer coating 200 may optionally comprise fourth metallic layer 250. In some embodiments, the fourth metallic layer is formed directly on third metallic layer 240. In other embodiments, an intervening layer may be formed between the third metallic layer and the fourth metallic layer.

In some embodiments, fourth metallic layer 250 may be a platinum group-based layer, with the chemistry as described above in relation to second metallic layer 230.

In some cases, fourth metallic layer 250 layer may have a particular microstructure. For example, the fourth metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the fourth metallic layer may have an amorphous structure.

In some embodiments, fourth metallic layer 250 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In certain embodiments, the fourth metallic layer may have a thickness of about 0.5 microns.

As described above, multi-layer coating 200 may comprise fifth metallic layer 260. In some embodiments, the fifth metallic layer is formed directly on fourth metallic layer 250. In other embodiments, an intervening layer may be formed between the fifth metallic layer and the fourth metallic layer. In yet other embodiments, when the metallic layer 250 is not present, metallic layer 260 may be formed directly on metallic layer 240.

In certain embodiments, fifth metallic layer 260 may comprise a platinum group metal (e.g., ruthenium, rhodium, palladium, osmium, iridium, and/or platinum). In some cases, it may be preferable for the platinum group metal to be rhodium (e.g., the fifth metallic layer may be a rhodium-based layer). It has been observed that particularly attractive properties (e.g., immersion corrosion) are achievable when the platinum metal-based layer comprises rhodium. Rhodium may be in the form of rhodium metal (e.g., substantially pure). In some cases, rhodium may be in the form of an alloy along with one or more other metals (e.g., precious metals). Other compositions may also be suitable for the fifth layer.

In some cases, fifth metallic layer 260 (e.g., layer comprising rhodium) may have a particular microstructure. For example, the fifth metallic layer (e.g., layer comprising rhodium) may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the fifth metallic layer may have an amorphous structure.

In some embodiments, fifth metallic layer 260 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In some embodiments, the fifth metallic layer may have a thickness of about 0.5 microns .

In certain embodiments, multi-layer 200 may comprise first metallic layer 220 which comprises copper, second metallic layer 230 which comprises palladium, third metallic layer 240 which comprises nickel (e.g., a nickel-based alloy such as nickel tungsten alloy), fourth metallic layer 250 which comprises palladium, and fifth metallic layer 260 which comprises rhodium. Coatings with this structure may have both superior immersion corrosion properties and excellent wear properties. In particular, the combination of a second metallic layer comprising palladium and third metallic layer which is a barrier layer may exhibit synergistic properties with respect to these parameters. This synergistic effect could be due to the second metallic layer 230 blocking pores or corrosion sites in the third metallic layer 240 either preexisting or developed by the corrosion environment.

It should be understood that coating 200 may include any combination of the above-described metallic layers. Also, it should be understood that the coating may include more than five metallic layers. However, in some embodiments, the coating may only include five metallic layers. In some embodiments, the coating may include less than five metallic layers (e.g., one or more of metallic layer 220, metallic layer 230, metallic layer 240, and metallic layer 250 described above may not be present). For example, the coating may include above-described metallic layer 260 (e.g., layer comprising rhodium) and one (or more) of the other layers (e.g., metallic layer 220, metallic layer 230, metallic layer 240, and metallic layer 250). In some embodiments, one or both of the metallic layer 220 and the metallic layer 240 may not be present.

An additional preferred embodiment is shown in FIG. 3, which depicts multilayer coating 300 on substrate 310. Multilayer coating 300 may comprise a first metallic layer 320, a second metallic layer 330, a third metallic layer 340, a fourth metallic layer 350, a fifth metallic layer 360, and a sixth metallic layer 370. It should be understood that intervening layers may be present between any two metallic layers, and/or between the first metallic layer and the substrate.

As noted above, the articles described herein may include substrate 310. A variety of different substrates may be suitable. In some cases, the substrate may comprise an electrically conductive material, such as a metal, metal alloy, intermetallic material, or the like. Suitable base materials include steel, stainless steel, copper and copper alloys (e.g. brass or bronze materials), aluminum and aluminum alloys, nickel and nickel alloys, polymers with conductive surfaces and/or surface treatments, and transparent conductive oxides, amongst others. In some embodiments, copper base materials are preferred. In some embodiments, the substrate may be formed substantially of one material (e.g., a single material layer or a bulk material). In other embodiments, the substrate is formed of more than one layer of different materials.

The substrate may be in the form of a variety of shapes and dimensions. For example, the substrate may be strip. In some cases, the substrate may be perforated. In some cases, the substrate may be a discrete component.

Multi-layer coating 300 can be formed on the substrate. In some cases, the coating covers substantially the entire outer surface area of the substrate. In some cases, the coating only covers a portion of the outer surface area of the substrate. For example, the coating may only cover one outer surface of the substrate. In some cases, portions of the substrate may be masked when forming the coating so that the coating is formed selectively on certain portions of the substrate while leaving other portions of the substrate uncoated. In some embodiments, one or more layers of the coating may be selectively deposited (e.g., using a mask) when being formed. That is, one or more layers (e.g., a metal layer such as Pd or Rh) may cover only a portion of the outer surface area of the underlying layer or substrate.

As described above, multi-layer coating 300 may optionally comprise first metallic layer 320. In some embodiments, the first metallic layer is formed directly on substrate 310. In other embodiments, an intervening layer may be formed between the substrate and the first metallic layer.

In certain embodiments, first metallic layer 320 may comprise copper. The copper may be in the form of copper metal (e.g., substantially pure metal). In some embodiments, the first metallic layer may comprise nickel (e.g., bright nickel). The nickel may be in the form of nickel metal (e.g., substantially pure metal) or in the form of a nickel-based alloy. In certain embodiments, the first metallic layer may comprise tin (e.g., bright tin). The tin may be in the form of tin metal (e.g., substantially pure metal) or in the form of a tin-based alloy.

In some cases, first metallic layer 320 may have a particular microstructure. For example, the second metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the second metallic layer may have an amorphous structure.

In some embodiments, first metallic layer 320 may have a thickness of greater than 0.25 microns, 0.5 microns, 1.0 micron, 2.5 microns. In some embodiments, the first metallic layer may have a thickness of less than 10 microns, 5 microns, 2 microns, 1 micron, 0.5 microns, 0.25 microns,. Combinations of the above-referenced ranges are also possible (e.g., between 0.25 and 10.0 microns; between 0.5 and 5.0 microns; between 0.25 and 2.0 microns; or between 1.0 microns and 5 microns, and the like). Other ranges are also possible. In certain embodiments, the first metallic layer may have a thickness of about 2 microns.

As described above, multi-layer coating 300 may comprise second metallic layer 330. In some embodiments, the second metallic layer is formed directly on first metallic layer 320. In other embodiments, an intervening layer may be formed between the first metallic layer and the second metallic layer. In yet other embodiments, the second metallic layer may be formed directly on substrate 310.

In some embodiments, for example, second metallic layer 330 may comprise nickel (e.g., be a nickel-based layer). The nickel may be in the form of nickel metal (e.g., substantially pure metal). In some cases, the second metallic layer may comprise a nickel-based alloy. In some cases, the nickel-alloy further comprises tungsten and/or molybdenum (e.g., a nickel-tungsten alloy, a nickel-molybdenum alloy, a nickel-tungsten-molybdenum alloy). The nickel alloy may be in the form of a solid solution. Other nickel alloys may also be employed. For example, the nickel alloy may further comprise cobalt, phosphorus, and/or palladium. In some cases, the weight percent of nickel in the alloy may be between 25-85 weight percent; and, in some cases, between 50 and 80 weight percent. In these cases, the remainder of the alloy may be tungsten and/or molybdenum. Other weight percentages outside of this range may be used as well. For example, in some embodiments and for certain applications, the weight percent of tungsten in the alloy may be greater than or equal to 10 weight percent; in some cases, greater than or equal to 14 weight percent; in some cases, greater than or equal to 15 weight percent; and, in some cases greater than or equal to 20 weight percent. In some cases, the total weight percentage of tungsten in the alloy is less than or equal to 50 weight percent; in some cases, the total weight percentage of tungsten in the alloy is less than or equal to 45 weight percent; in some cases, the total weight percentage of tungsten in the alloy is less than or equal to 40 weight percent; in some cases, the total weight percentage of tungsten in the alloy is less than or equal to 35 weight percent; in some cases, the total weight percentage of tungsten in the alloy is less than or equal to 30 weight percent; and, in some cases, the total weight percentage of tungsten in the alloy is less than or equal to 20 weight percent.

In certain embodiments, second metallic layer 330 may be a tin-based layer, or may comprise tin. The tin may be in the form of tin metal (e.g., substantially pure metal). In some cases, the third metallic layer may comprise a tin-based alloy. The tin alloy may be in the form of a solid solution.

In some embodiments, second metallic layer 330 is a silver-based layer, or a layer which comprises silver. The silver may be in the form of silver metal (e.g., substantially pure metal). In some cases, the second metallic layer may comprise a silver-based alloy. Such alloys may also, for example, comprise tungsten and/or molybdenum. The silver-based alloy may be in the form of a solid solution. In some embodiments, it is preferable for the second metallic layer to comprise a silver-tungsten alloy. Other silver alloys may also be employed. In some embodiments, the weight percent of tungsten and/or molybdenum in the alloy (e.g., the remainder being substantially silver) may be at least 0.1 weight percent, at least 0.25 weight percent, at least 0.5 weight percent, at least 1 weight percent, at least 2 weight percent, at least 5 weight percent and/or at least 10 weight percent. In some embodiments, the weight percent of tungsten and/or molybdenum in the alloy (e.g., the remainder being substantially silver) may be less than 25 weight percent, less than 10 weight percent, less than 5 weight percent, less than 2.5 weight percent, less than 1 weight percent and/or less than 0.5 weight percent. It should be understood that all suitable combinations of the above-noted ranges are possible (e.g., between 0.1 and 25 weight percent; between 0.5 and 5 weight percent; between 1 and 2.5 and the like). Other weight percentages outside of this range may be used as well. In some embodiments, the third metallic layer may comprise a "hard silver". In some cases, the Vickers hardness of the silver-based second metallic layer is greater than 100 VHN; and, in some cases, greater than 150 VHN; and, in some cases greater than 200 VHN. In some cases, the Vickers hardness is less than 500 VHN and, in some cases, less than 400 VHN. In some cases, second metallic layer 330 is a silver-based layer and is thermally stable. For example, the grain size of the silver-based second metallic layer remains stable at elevated temperatures. In some cases, the grain size of the silver-based second metallic layer changes by no more than about 30 nm, no more than about 20 nm, no more than about 15 nm, no more than about 10 nm, or no more than about 5 nm following exposure to a temperature of at least 150 °C for at least 500 hours. In some cases, the grain size changes by no more than about 50 nm, no more than about 30 nm, no more than about 20 nm, no more than about 15 nm, no more than about 10 nm, or no more than about 5 nm following exposure to a temperature of about 225 °C for at least 500 hours. In addition, the contact resistance of the coating may change by less than about 25%, less than about 20%, less than about 15%, less than about 10%, or less than about 5%, following exposure to a temperature of about 150 °C or 225 °C for at least about 500 hours.

In some cases, second metallic layer 330 is a silver-based layer and has a stable hardness. In certain embodiments, the hardness of the silver-based second metallic layer changes by no more than about 5%, no more than about 10%, no more than about 20%, no more than about 30% or no more than about 40% following exposure to a temperature of at least 150 °C for at least 500 hours. In some cases, the hardness of the silver-based second metallic layer changes by no more than about 5%, no more than about 10%, no more than about 20%, no more than about 30%, or no more than about 40% following exposure to a temperature of at least 225 °C for at least 500 hours.

In some cases, second metallic layer 330 layer may have a particular microstructure. For example, the second metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the second metallic layer may have an amorphous structure.

In some embodiments, second metallic layer 330 may have a thickness of greater than 0.25 microns, 0.5 microns, 1.0 micron, 2.5 microns. In some embodiments, the first metallic layer may have a thickness of less than 10 microns, 5 microns, 2 microns, 1 micron, 0.5 microns, 0.25 microns,. Combinations of the above-referenced ranges are also possible (e.g., between 0.25 and 10.0 microns; between 0.5 and 5.0 microns; between 0.25 and 2.0 microns; or between 1.0 microns and 5 microns, and the like). Other ranges are also possible. In certain embodiments, the third metallic layer may have a thickness of about 1.5 microns.

As described above, multi-layer coating 300 may comprise third metallic layer 340. In some embodiments, the third metallic layer is formed directly on second metallic layer 330. In other embodiments, an intervening layer may be formed between the second metallic layer and the first metallic layer.

In some embodiments, third metallic layer 340 comprises a platinum group metal (e.g., it may be a platinum group-based layer). Non-limiting examples of suitable platinum group metals include ruthenium, rhodium, palladium, osmium, iridium, and/or platinum. Palladium may be preferred in some embodiments (e.g., the second metallic layer may be a palladium-based layer). In some embodiments, the third metallic layer consists essentially of one precious metal. In some embodiments, it may be preferable that the third metallic layer is free of tin. In some cases, the platinum group metal is not rhodium and/or is not ruthenium. In other cases, the third metallic layer may comprise an alloy that includes at least one platinum group metal and at least one other metal. The other metal may be selected from Ni, W, Fe, B, S, Co, Mo, Cu, Cr, Zn, and Sn, amongst others.

In some cases, third metallic layer 340 may have a particular microstructure. For example, the third metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the third layer may have an amorphous structure.

In some embodiments, third metallic layer 340 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In certain embodiments, the third metallic layer may have a thickness of about 0.5 microns.

As described above, multi-layer coating 300 may comprise fourth metallic layer 350. In some embodiments, the fourth metallic layer is formed directly on third metallic layer 340. In other embodiments, an intervening layer may be formed between the third metallic layer and the fourth metallic layer.

In some embodiments, for example, fourth metallic layer 350 may be a nickel-based layer, with chemical composition as described above in relation to second metallic layer 330. In certain embodiments, the fourth metallic layer may be a tin-based layer, with chemical composition as described above in relation to the second metallic layer. In some embodiments, the fourth metallic layer is a silver-based layer, with chemical composition and physical properties as described above in relation to the second metallic layer.

In some cases, fourth metallic layer 350 layer may have a particular microstructure. For example, the fourth metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the fourth metallic layer may have an amorphous structure.

In some embodiments, fourth metallic layer 350 may have a thickness of greater than 0.25 microns, 0.5 microns, 1.0 micron, 2.5 microns. In some embodiments, the first metallic layer may have a thickness of less than 10 microns, 5 microns, 2 microns, 1 micron, 0.5 microns, 0.25 microns,. Combinations of the above-referenced ranges are also possible (e.g., between 0.25 and 10.0 microns; between 0.5 and 5.0 microns; between 0.25 and 2.0 microns; or between 1.0 microns and 5 microns, and the like). Other ranges are also possible. In certain embodiments, the third metallic layer may have a thickness of about 1.5 microns.

As described above, multi-layer coating 300 may optionally comprise fifth metallic layer 360. In some embodiments, the fifth metallic layer is formed directly on fourth metallic layer 350. In other embodiments, an intervening layer may be formed between the fourth metallic layer and the fifth metallic layer.

In some embodiments, fifth metallic layer 360 may be a platinum group-based layer, with the chemistry as described above in relation to third metallic layer 340.

In some cases, fifth metallic layer 360 layer may have a particular microstructure. For example, the fifth metallic layer may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the fifth metallic layer may have an amorphous structure.

In some embodiments, fifth metallic layer 360 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In certain embodiments, the fifth metallic layer may have a thickness of about 0.5 microns.

As described above, multi-layer coating 300 may comprise sixth metallic layer 370. In some embodiments, the sixth metallic layer is formed directly on fifth metallic layer 360. In other embodiments, an intervening layer may be formed between the sixth metallic layer and the fifth metallic layer. In yet other embodiments, metallic layer 370 may be formed directly on fourth metallic layer 350.

In certain embodiments, sixth metallic layer 370 may comprise a platinum group metal (e.g., ruthenium, rhodium, palladium, osmium, iridium, and/or platinum). In some cases, it may be preferable for the platinum group metal to be rhodium (e.g., the fifth metallic layer may be a rhodium-based layer). It has been observed that particularly attractive properties (e.g., immersion corrosion) are achievable when the platinum metal-based layer comprises rhodium. Rhodium may be in the form of rhodium metal (e.g., substantially pure). In some cases, rhodium may be in the form of an alloy along with one or more other metals (e.g., precious metals). Other compositions may also be suitable for the sixth layer.

In some cases, sixth metallic layer 370 (e.g., layer comprising rhodium) may have a particular microstructure. For example, the sixth metallic layer (e.g., layer comprising rhodium) may have a nanocrystalline microstructure. The number-average size of crystalline grains may, in some embodiments, be less than 200 nm, less than 100 nm, less than 50 nm, less than 25 nm, and/or less than 10 nm. In some embodiments, the number-average size of crystalline grains may be greater than 1 nm, greater than 5 nm, greater than 10 nm and/or greater than 25 nm. It should be understood that all suitable combinations of the above-noted ranges are possible (e.g., between 5 nm and 100 nm, between 10 nm and 50 nm, between 15 nm and 35 nm and the like). In some embodiments, the sixth metallic layer may have an amorphous structure.

In some embodiments, sixth metallic layer 370 may have a thickness of greater than 0.1 microns, greater than 0.25 microns, greater than 0.5 microns, greater than1 micron, and/or greater than 2.5 microns. In some embodiments, the thickness is less than 10.0 microns, less than 5.0 microns, less than 2.0 microns, less than 1.0 microns, less than 0.5 microns, less than 0.25 microns and/or less than 0.1 microns. Combinations of the above-referenced ranges are also possible (e.g., between 0.1 and 10.0 microns; between 0.25 and 5.0 microns; between 0.5 and 3.0 microns and the like). Other ranges are also possible. In some embodiments, the sixth metallic layer may have a thickness of about 0.5 microns.

In certain embodiments, multi-layer 300 may comprise first metallic layer 320 which comprises copper, second metallic layer 330 which comprises nickel (e.g., a nickel-based alloy such as a nickel tungsten alloy), third metallic layer 340 which comprises palladium, fourth metallic layer 350 which comprises nickel (e.g., a nickel-based alloy such as a nickel tungsten alloy), fifth metallic layer 360 which comprises palladium, and sixth metallic layer 370 which comprises rhodium. Coatings with this structure may have both superior immersion corrosion properties and excellent wear properties. In particular, the combination of a third metallic layer comprising palladium and fourth metallic layer which is a barrier layer may exhibit synergistic properties with respect to these parameters. This synergistic effect could be due to the third metallic layer 330 blocking pores or corrosion sites in the fourth metallic layer 350 either preexisting or developed by the corrosion environment.

It should be understood that coating 300 may include any combination of the above-described metallic layers. Also, it should be understood that the coating may include more than six metallic layers. However, in some embodiments, the coating may only include six metallic layers. In some embodiments, the coating may include less than six metallic layers (e.g., one or more of first metallic layer 320, second metallic layer 330, third metallic layer 340, fourth metallic layer 350, and fifth metallic layer 360 described above may not be present). For example, the coating may include above-described sixth metallic layer 370 (e.g., layer comprising rhodium) and one (or more) of the other layers (e.g., metallic layer 320, metallic layer 330, metallic layer 340, metallic layer 350, and/or metallic layer 360). In some embodiments, one or both of the metallic layer 320 and the metallic layer 360 may not be present.

As noted above, metallic layers of the coating are formed using an electrodeposition process. Electrodeposition generally involves the deposition of a material (e.g., electroplate) on a substrate by contacting the substrate with an electrodeposition bath and flowing electrical current between two electrodes through the electrodeposition bath, i.e., due to a difference in electrical potential between the two electrodes. For example, methods described herein may involve providing an anode, a cathode, an electrodeposition bath (also known as an electrodeposition fluid) associated with (e.g., in contact with) the anode and cathode, and a power supply connected to the anode and cathode. In some cases, the power supply may be driven to generate a waveform for producing a coating, as described more fully below.

Generally, the different metallic layers may be applied using separate electrodeposition baths. In some cases, individual articles may be connected such that they can be sequentially exposed to separate electrodeposition baths, for example in a reel-to-reel process. For instance, articles may be connected to a common conductive substrate (e.g., a strip). In some embodiments, each of the electrodeposition baths may be associated with separate anodes and the interconnected individual articles may be commonly connected to a cathode.

The electrodeposition process(es) may be modulated by varying the potential that is applied between the electrodes (e.g., potential control or voltage control), or by varying the current or current density that is allowed to flow (e.g., current or current density control). In some embodiments, the coating may be formed (e.g., electrodeposited) using direct current (DC) plating, pulsed current plating, reverse pulse current plating, or combinations thereof. In some embodiments, reverse pulse plating may be preferred, for example, to form the barrier layer (e.g., nickel-tungsten alloy). Pulses, oscillations, and/or other variations in voltage, potential, current, and/or current density, may also be incorporated during the electrodeposition process, as described more fully below. For example, pulses of controlled voltage may be alternated with pulses of controlled current or current density. In general, during an electrodeposition process an electrical potential may exist on the substrate (e.g., base material) to be coated, and changes in applied voltage, current, or current density may result in changes to the electrical potential on the substrate. In some cases, the electrodeposition process may include the use waveforms comprising one or more segments, wherein each segment involves a particular set of electrodeposition conditions (e.g., current density, current duration, electrodeposition bath temperature, etc.), as described more fully below.

Some embodiments of the invention involve electrodeposition methods wherein the grain size of electrodeposited materials (e.g., metals, alloys, and the like) may be controlled. In some embodiments, selection of a particular coating (e.g., electroplate) composition, such as the composition of an alloy deposit, may provide a coating having a desired grain size. In some embodiments, electrodeposition methods (e.g., electrodeposition conditions) described herein may be selected to produce a particular composition, thereby controlling the grain size of the deposited material.

In some embodiments, a coating, or portion thereof, may be electrodeposited using direct current (DC) plating. For example, a substrate (e.g., electrode) may be positioned in contact with (e.g., immersed within) an electrodeposition bath comprising one or more species to be deposited on the substrate. A constant, steady electrical current may be passed through the electrodeposition bath to produce a coating, or portion thereof, on the substrate. In some embodiments, the potential that is applied between the electrodes (e.g., potential control or voltage control) and/or the current or current density that is allowed to flow (e.g., current or current density control) may be varied. For example, pulses, oscillations, and/or other variations in voltage, potential, current, and/or current density, may be incorporated during the electrodeposition process. In some embodiments, pulses of controlled voltage may be alternated with pulses of controlled current or current density. In some embodiments, the coating may be formed (e.g., electrodeposited) using pulsed current electrodeposition, reverse pulse current electrodeposition, or combinations thereof.

In some cases, a bipolar waveform may be used, comprising at least one forward pulse and at least one reverse pulse, i.e., a "reverse pulse sequence." In some embodiments, the at least one reverse pulse immediately follows the at least one forward pulse. In some embodiments, the at least one forward pulse immediately follows the at least one reverse pulse. In some cases, the bipolar waveform includes multiple forward pulses and reverse pulses. Some embodiments may include a bipolar waveform comprising multiple forward pulses and reverse pulses, each pulse having a specific current density and duration. In some cases, the use of a reverse pulse sequence may allow for modulation of composition and/or grain size of the coating that is produced.

As noted above, articles including the multi-layer coating can exhibit desirable properties and characteristics including, for example, exceptional immersion corrosion properties. The immersion corrosion properties described herein can be measured in a three electrode temperature-controlled jacketed cell at 22 °C. The cell includes a platinum wire as a counter electrode and a Ag/AgCl reference electrode in a saturated KCl solution. The sample (e.g., coated article, coated strip, coated component such as an electrical connector) forms the working electrode and is immersed in a testing solution such as artificial perspiration (e.g., artificial perspiration manufactured according to ISO 3160) and a positive bias (e.g., 2 Volts, 5 Volts) is applied to the sample. The time to failure (e.g., in minutes) is measured.

The immersion corrosion properties of a coated component (e.g., an electrical connector) may be further evaluated by subjecting the component to immersion corrosion testing, while mating and un-mating the component to a second connector (e.g., cable connector), referred to as "immersion corrosion plus wear". For example, the artificial perspiration (volume of 20 microliters) is introduced into a housing surrounding the connector. The component is mated to the cable connector. A positive bias (e.g. 5 Volts) is applied to the component via the cable connector for a time period. The component and connector are mated and unmated 25 times. The low level contact resistance (LLCR) is measured and the coated component is analyzed using optical imaging. These steps are repeated until failure.

There are several types of failure that may be characterized in different ways. As used herein, the time to "initial visible failure" is defined as the test time until the first visible signs of corrosion on the sample to the naked eye.

As used herein, the time to "functional failure" is the test time until a connector formed from the sample no longer functions as defined by its mating surface having an LLCR (low level contact resistance) of greater than 10 µOhm when measured according to EIA-364-23B. In some embodiments, functional failure may be the test time until the mating surface has an LLCR of greater than 1 mOhm; in some embodiments, an LLCR of greater than 10 mOhm; in some embodiments, an LLCR of greater than 25 mOhm; in some embodiments, an LLCR of greater than 50 mOhm; in some embodiments, an LLCR of greater than 100 mOhm; in some embodiments, an LLCR of greater than 250 mOhm; in some embodiments, an LLCR of greater than 1 Ohm; in some embodiments, an LLCR of greater than 5 Ohms; in some embodiments, an LLCR of greater than 10 Ohms; and, in some embodiments, an LLCR of greater than 20 Ohms when measured according to EIA-364-23B. In some embodiments, the time to functional failure is the test time until a connector formed from the sample no longer functions as defined by its mating surface having a change in LLCR of greater than or equal to 1 mOhm; in some embodiments, a change in LLCR of greater than 10 mOhm; in some embodiments, a change in LLCR of greater than 20 mOhm; in some embodiments, a change in LLCR of greater than 50 mOhm; in some embodiments, a change in LLCR of greater than 100 mOhm;,and, in some embodiments, a change in LLCR of greater than 250 mOhm, when measured according to EIA-364-23B.

As used herein, the time to "distinct corrosion" failure may be defined as the test time until the first corrosion product of a size and location as described in EIA-364-53B "Nitric Acid Vapor Test, Gold Finish Test Procedure for Electrical Connectors and Sockets" has a frequency of greater than 2%; in some embodiments, greater than 10%; in some embodiments greater than 15%; and, in some embodiments, greater than 25%. "Distinct corrosion" may also be defined as signs of corrosion from base substrate material.

Those of ordinary skill in the art will recognize that visible corrosion along the edges of the multi-layer coating are often caused by "edge effects" and are often discounted as signs of failure during a given test. Those of ordinary skill in the art will also recognize that local processing defects, incorrect cleaning or activation of the sample prior to layer synthesis, or mechanically or chemically damaging exposures of the multi-layer coating prior to testing could cause a given test to be invalid regardless of the failure type being evaluated.

The exceptional immersion corrosion properties of articles including a multi-layer coating may be characterized by time(s) and/or test cycles to failure in an immersion corrosion test. For example, in some embodiments, the time to failure (e.g., initial visible failure, functional failure and/or distinct corrosion failure) of the multi-layer coated articles is at least 5 minutes at 5 Volts in artificial perspiration; in some embodiments, at least 10 minutes at 5 Volts in artificial perspiration; in some embodiments, at least 20 minutes at 5 Volts in artificial perspiration; in some embodiments, at least 40 minutes at 5 Volts in artificial perspiration; in some embodiments, at least 80 minutes at 5 Volts in artificial perspiration; and, in some embodiments, at least 100 minutes at 5 Volts in artificial perspiration. In some embodiments, the time to initial visible failure is less than 360 minutes at 5 Volts in artificial perspiration, less than 240 minutes at 5 Volts in artificial perspiration or less than 120 minutes at 5 Volts in artificial perspiration. In some embodiments, the time to failure (e.g., initial visible failure, functional failure and/or distinct corrosion failure) of the multi-layer coated articles is at least 5 minutes at 2 Volts in artificial perspiration; in some embodiments, at least 10 minutes at 2 Volts in artificial perspiration; in some embodiments, at least 20 minutes at 2 Volts in artificial perspiration; in some embodiments, at least 40 minutes at 2 Volts in artificial perspiration; in some embodiments, at least 80 minutes at 2 Volts in artificial perspiration; and, in some embodiments, at least 100 minutes at 2 Volts in artificial perspiration. In some embodiments, the time to initial visible failure is less than 360 minutes at 2 Volts in artificial perspiration, less than 240 minutes at 2 Volts in artificial perspiration or less than 120 minutes at 2 Volts in artificial perspiration. In some embodiments, for example in the "immersion corrosion plus wear test", the test cycles to failure (e.g., initial visible failure, functional failure and/or distinct corrosion failure) of the multi-layer coated articles is at least 1 cycle of "immersion corrosion plus wear"; in some embodiments, at least 5 cycles of "immersion corrosion plus wear"; in some embodiments, at least 10 cycles of "immersion corrosion plus wear"; in some embodiments, at least 20 cycles of "immersion corrosion plus wear"; in some embodiments, at least 50 cycles of "immersion corrosion plus wear"; and, in some embodiments, at least 100 cycles of "immersion corrosion plus wear".

In some embodiments, the corrosion resistance may be assessed using tests such as ASTM B845, entitled "Standard Guide for Mixed Flowing Gas (MFG) Tests for Electrical Contacts" following the Class IIa protocol. These tests outline procedures in which coated substrate samples are exposed to a corrosive atmosphere (i.e., a mixture of NO₂, H₂S, Cl₂, and SO₂). The mixture of flowing gas can comprise 200 +/-50 ppb of NO₂, 10 +/- 5 ppb of H₂S, 10 +/- 3 ppb of Cl₂, and 100 +/- 20 ppb SO₂. The temperature and relative humidity may also be controlled. For example, the temperature may be 30 +/- 1 °C, and the relative humidity may be 70 +/- 2%.

The low-level contact resistance of a sample may be determined before and/or after exposure to a corrosive environment for a set period of time according to one of the tests described above. In some embodiments, the low-level contact resistance may be determined according to specification EIA 364-23B. In some embodiments, the coated article has reduced low-level contact resistance and/or change in low-level contact resistance after testing. Such articles may be particularly useful in electrical applications such as electrical connectors.

In some cases, the coated article may have a low-level contact resistance (LLCR) (under a load of 25 g) after 5 days exposure to mixed flowing gas according to ASTM B845, protocol Class IIa, of less than 250 mOhm; in some embodiments, less than 100 mOhm; in some embodiments, less than 50 mOhm; in some embodiments, less than 25 mOhm; in some embodiments, less than 10 mOhm; in some embodiments, less than 1 mOhm; and, in some embodiments, less than 10 µOhm.

In some cases, the coated article may have a change in low-level contact resistance (LLCR) (under a load of 25 g) after 5 days exposure to mixed flowing gas according to ASTM B845, protocol Class IIa, of less than 250 mOhm; in some embodiments, less than 100 mOhm; in some embodiments, less than 50 mOhm; in some embodiments, less than 20 mOhm; in some embodiments, less than 10 mOhm; and, in some embodiments, less than or equal to 1 mOhm.

Inventive articles including multi-layer coatings can also exhibit desired mechanical wear performance when incorporated into functional products, such as electrical connectors. The mechanical wear performance described herein can be measured as follows. First, initial LLCR measurements and optical imaging are performed. Then, large numbers of mating cycles between the cable connector and the device arc performed, with each set of cycles followed by additional LLCR measurements and further optical imaging. For example the first set of mating cycles could include 5,000 mating cycles; the second and third sets include 2,000 mating cycles; and the last set includes 1,000 mating cycles. Many different combinations of mating cycle increments can be defined. The testing concludes with a final LLCR measurement and final optical imaging. Wear performance can be evaluated by the optical images of the contacts; articles with exemplary wear performance exhibit little change in their morphology after undergoing mating cycles, while those displaying poor wear performance show erosion of material at the contact interfaces down to and including exposing the base material.

The articles can be used in a variety of applications including electrical applications such as electrical connectors (e.g., plug-type) or cosmetic components (such as jewelry and eyeglass frames ). Non-limiting examples of electrical connectors include infrared connectors, data and/or power connectors (e.g., USB connectors), video connectors (e.g., HDMI connectors), audio connectors (e.g., 3.5mm audio plug), battery chargers, battery contacts, automotive electrical connectors, etc.

The following example is for illustrative purposes only and should not be considered to be limiting.

### EXAMPLE 1

This example compares the immersion corrosion performance of an article including a multi-layer coating ("inventive coating") according to an embodiment described above to an article including a conventional coating.

Sample 1 was formed by applying an inventive coating to a substrate using electrodeposition processes. The coating included a first metallic layer comprising a nickel tungsten alloy, a second metallic layer comprising a silver tungsten alloy, a third metallic layer comprising gold and a fourth metallic layer comprising rhodium. This sample also has an intervening layer of Pd between the first and second layers which provides enhanced adhesion.

Sample 2 was formed by applying a conventional coating to a substrate using electrodeposition processes. The coating included a first metallic layer comprising nickel and a second metallic layer comprising gold. Sample 2 is a common industry standard for high-performance applications, and would be considered by those of ordinary skill in the art to be a premium, durable connector finish.

The immersion corrosion properties of the samples were measured. The measurement utilized a three electrode temperature-controlled jacketed cell at 22 °C.

The cell included a platinum wire as a counter electrode and a Ag/AgCl reference electrode in a saturated KCl solution. The samples were immersed in an artificial perspiration testing solution (artificial perspiration manufactured according to ISO 3160) and a positive bias (5 Volts) is applied to the sample. The time to initial visible failure (e.g., in minutes) was measured.

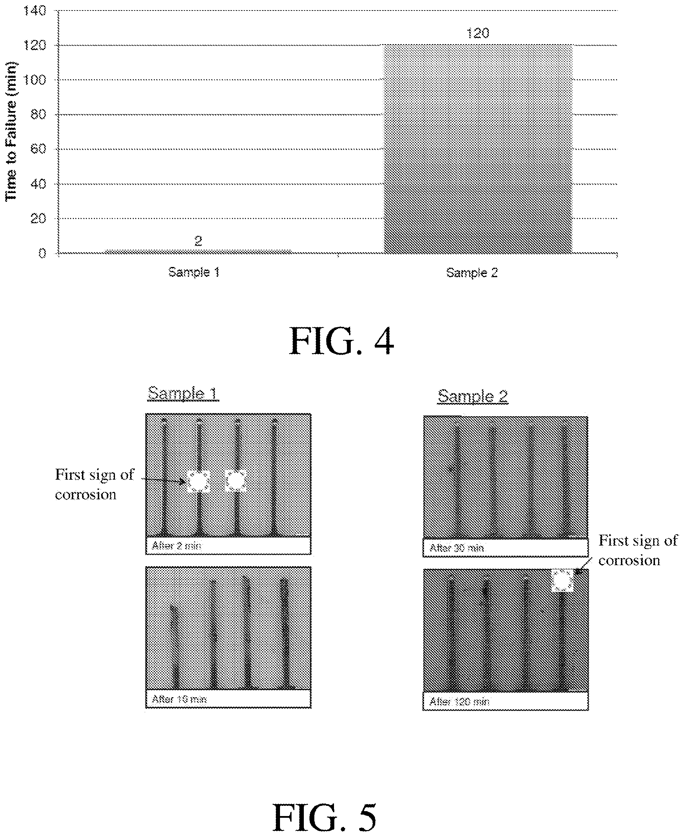

FIG. 4 illustrates the time to initial visible failure (minutes) in an immersion corrosion test for the samples. As shown on FIG. 4, Sample 1 had an initial visible failure time of 120 minutes and Sample 2 had an initial visible failure time of 2 minutes. Therefore, the sample including the inventive coating exhibited a 60X improvement as compared to the sample including the conventional coating.

FIG. 5 are copies of photographs of Samples 1 and 2 after immersion corrosion testing at different test times.

## Claims

1. An article comprising:
a substrate (110);
a coating (100) formed on the substrate (110), the coating (100) comprising:
a first metallic layer (120) formed on the substrate (110);
a second metallic layer (130) formed on the first metallic layer (120);
a third metallic layer (140) formed on the second metallic layer (130), wherein the third metallic layer (140) comprises a precious metal; and
a fourth metallic layer (150) formed on the third metallic layer (140),
wherein the fourth metallic layer (150) comprises a platinum group metal;
**characterized in that**
the first metallic layer (120) comprises a nickel-based alloy further comprising tungsten and/or molybdenum.

2. A method of forming a coated article comprising
electrodepositing multiple layers of a coating (100) on a substrate (110), wherein the coating (100) comprises:
a first metallic layer (120) formed on the substrate (110), wherein the first metallic layer (120) comprises a nickel-based alloy further comprising tungsten and/or molybdenum;
a second metallic layer (130) formed on the first metallic layer (120);
a third metallic layer (140) formed on the second metallic layer (130), wherein
the third metallic layer (140) comprises a precious metal; and
a fourth metallic layer (150) formed on the third metallic layer (140), wherein the fourth metallic layer (150) comprises a platinum group metal.

3. The article or method of any preceding claim, wherein the first metallic layer (120) is formed directly on the substrate (110).

4. The article or method of any preceding claim, wherein the nickel-based alloy comprises a nickel tungsten alloy.

5. The article or method of any preceding claim, wherein the first metallic layer (120) has a thickness of between 0.1 and 5.0 microns.

6. The article or method of any preceding claim, wherein the second metallic layer (130) is formed directly on the first metallic layer.

7. The article or method of any of claims 1 to 5,
wherein the coating (100) comprises an intervening layer formed between the first metallic layer (120) and the second metallic layer (130).

8. The article or method of any preceding claim, wherein the second metallic layer (130) comprises silver.

## Patentansprüche

1. Artikel, umfassend:
ein Substrat (110);
eine auf dem Substrat (110) ausgebildete Beschichtung (100), wobei die Beschichtung (100) umfasst:
eine auf dem Substrat (110) ausgebildete erste metallische Schicht (120);
eine auf der ersten metallischen Schicht (120) ausgebildete zweite metallische Schicht (130);
eine auf der zweiten metallischen Schicht (130) ausgebildete dritte metallische Schicht (140), wobei die dritte metallische Schicht (140) ein Edelmetall umfasst; und
eine auf der dritten metallischen Schicht (140) ausgebildete vierte metallische Schicht (150), wobei die vierte metallische Schicht (150) ein Metall aus der Platingruppe umfasst;
**dadurch gekennzeichnet, dass**
die erste metallische Schicht (120) eine Legierung auf Nickel-Basis umfasst, die ferner Wolfram und/oder Molybdän umfasst.

2. Verfahren zur Ausbildung eines beschichteten Gegenstands, das die folgenden Schritte umfasst:
Elektroabscheidung mehrerer Schichten einer Beschichtung (100) auf einem Substrat (110), wobei die Beschichtung (100) umfasst:
eine auf dem Substrat (110) ausgebildete erste metallische Schicht (120), wobei die erste metallische Schicht (120) eine Legierung auf Nickel-Basis umfasst, die ferner Wolfram und/oder Molybdän umfasst;
eine auf der ersten metallischen Schicht (120) ausgebildete zweite metallische Schicht (130);
eine auf der zweiten metallischen Schicht (130) ausgebildete dritte metallische Schicht (140), wobei
die dritte metallische Schicht (140) ein Edelmetall umfasst; und
eine auf der dritten metallischen Schicht (140) ausgebildete vierte metallische Schicht (150), wobei die vierte metallische Schicht (150) ein Metall aus der Platingruppe umfasst.

3. Artikel oder Verfahren gemäß mindestens einem der vorhergehenden Ansprüche, wobei die erste metallische Schicht (120) direkt auf dem Substrat (110) ausgebildet ist.

4. Artikel oder Verfahren gemäß mindestens einem der vorhergehenden Ansprüche, wobei die Legierung auf Nickel-Basis eine Nickel-Wolfram-Legierung umfasst.

5. Artikel oder Verfahren gemäß mindestens einem der vorhergehenden Ansprüche, wobei die erste metallische Schicht (120) eine Dicke zwischen 0,1 und 5,0 Mikrometern hat.

6. Artikel oder Verfahren gemäß mindestens einem der vorhergehenden Ansprüche, wobei die zweite metallische Schicht (130) direkt auf der ersten metallischen Schicht ausgebildet ist.

7. Artikel oder Verfahren gemäß mindestens einem der Ansprüche 1 bis 5, wobei die Beschichtung (100) eine Zwischenschicht umfasst, die zwischen der ersten metallischen Schicht (120) und der zweiten metallischen Schicht (130) ausgebildet ist.

8. Artikel oder Verfahren gemäß mindestens einem der vorhergehenden Ansprüche, wobei die zweite metallische Schicht (130) Silber umfasst.

## Revendications

1. Article comprenant :
un substrat (110) ;
un revêtement (100) formé sur le substrat (110), le revêtement (100) comprenant :
une première couche métallique (120) formée sur le substrat (110) ;
une deuxième couche métallique (130) formée sur la première couche métallique (120) ;
une troisième couche métallique (140) formée sur la deuxième couche métallique (130),
dans lequel la troisième couche métallique (140) comprend un métal précieux ; et
une quatrième couche métallique (150) formée sur la troisième couche métallique (140),
dans lequel la quatrième couche métallique (150) comprend un métal du groupe du platine ;
**caractérisé en ce que**
la première couche métallique (120) comprend un alliage à base de nickel comprenant en outre du tungstène et/ou du molybdène.

2. Procédé de formation d'un article revêtu comprenant
un dépôt électrolytique de multiples couches d'un revêtement (100) sur un substrat (110), dans lequel le revêtement (100) comprend :
une première couche métallique (120) formée sur le substrat (110), dans lequel la première couche métallique (120) comprend un alliage à base de nickel comprenant en outre du tungstène et/ou du molybdène ;
une deuxième couche métallique (130) formée sur la première couche métallique (120) ;
une troisième couche métallique (140) formée sur la deuxième couche métallique (130), dans lequel la troisième couche métallique (140) comprend un métal précieux ; et
une quatrième couche métallique (150) formée sur la troisième couche métallique (140), dans lequel la quatrième couche métallique (150) comprend un métal du groupe du platine.

3. Article ou procédé selon une quelconque revendication précédente, dans lequel la première couche métallique (120) est formée directement sur le substrat (110).

4. Article ou procédé selon une quelconque revendication précédente, dans lequel l'alliage à base de nickel comprend un alliage de nickel et de tungstène.

5. Article ou procédé selon une quelconque revendication précédente, dans lequel la première couche métallique (120) présente une épaisseur entre 0,1 et 5,0 microns.

6. Article ou procédé selon une quelconque revendication précédente, dans lequel la deuxième couche métallique (130) est formée directement sur la première couche métallique.

7. Article ou procédé selon l'une quelconque des revendications 1 à 5, dans lequel le revêtement (100) comprend une couche intermédiaire formée entre la première couche métallique (120) et la deuxième couche métallique (130).

8. Article ou procédé selon une quelconque revendication précédente, dans lequel la deuxième couche métallique (130) comprend de l'argent.
